# DEMANDE DE BREVET EUROPEEN

(11) **EP 1 394 918 A1**
(43) Date de publication de la demande: **03.03.2004**
(21) Numéro de dépôt: 03356123.4
(22) Date de dépôt: 25.08.2003
(51) Int. Cl.: H02G 3/34

(54) **Dispositif de fixation d'une goulotte sous un plafond et chemin de cable comportant un tel dispositif**

(30) Priorité: 26.08.2002 FR 0210579
(71) Demandeur: Gewiss France SA, 21430 Liernais (FR)
(72) Inventeur: Lebrat, Jean-Pascal, 71640 Givry (FR); Garnier, André, 58230 Montsauche les Settons (FR); Leguy, Claude, 21430 Marcheseuil (FR)
(74) Mandataire: Myon, Gérard

(57) **Abrégé**

Ce dispositif de fixation comprend une traverse de verrouillage (8) et un élément (7), qui comporte au moins un montant (11) et qui est apte à être fixé au plafond. Ce montant (11) porte au moins un premier et un deuxième doigt inférieurs (15a, 15b) d'accrochage d'une goulotte (1). Ces premier et deuxième doigts (15a, 15b) sont horizontalement écartés l'un de l'autre et saillants dans deux directions sensiblement opposées.

La traverse de verrouillage (8) porte une première et une deuxième surfaces formant butées respectivement pour une première (4a) et une deuxième parois (4b) latérales de la goulotte (1).

## Description

La présente invention se rapporte au domaine des chemins de câbles formés d'une succession de goulottes. Plus précisément, elle concerne un dispositif de fixation d'une telle goulotte sous un plafond, ainsi qu'un chemin de câbles comportant un tel dispositif de fixation.

Il est connu, par exemple du document FR-A-2 686 141, de réaliser un chemin de câbles en aboutant plusieurs goulottes en tôle et en assemblant ces dernières aux moyens d'éclisses. Pour suspendre ce chemin à un plafond, il est connu du document FR-A-2 692 643 de fixer plusieurs montants verticaux à ce plafond et de munir ces montants verticaux de consoles rapportées, destinées à supporter les goulottes. Ces dernières sont fixées sur les consoles à l'aide de boulons ou de pattes parfois dénommées «crapaud», dont on trouvera un exemple dans le document FR-A-2 730 028.

Lors du montage des goulottes sur les consoles préalablement fixées, on installe ces boulons ou ces pattes tout en réglant la position des goulottes ou en maintenant ces dernières en place jusqu'à leur immobilisation définitive. Cela présente l'inconvénient de ne pas toujours être aisé à réaliser par un opérateur travaillant en hauteur, dans une position inconfortable.

Dans le document DE-U-92 04000 est décrit un élément de fixation d'un chemin pour câbles sous un plafond. Cet élément de fixation est réalisé dans un flan métallique et comprend deux parois latérales en regard, dont chacune se termine vers le bas par un rebord inférieur de support. Chacune des deux parois latérales du chemin de câble se termine vers le haut par une portion recourbée, qu'une lame découpée dans l'une des parois latérales de l'élément de fixation empêche de se décrocher d'un des rebords inférieur de support. L'insertion de la portion recourbée de chaque paroi latérale du chemin pour câbles entre un des rebords inférieurs de support et une des lames de l'élément de fixation est difficile à réaliser et nécessite certainement un outil pour écarter la lame du rebord inférieur correspondant.

L'invention a au moins pour but de faciliter l'installation d'un chemin de câbles.

A cet effet, l'invention a pour objet un dispositif de fixation d'une goulotte sous un plafond, comprenant un élément qui est apte à être fixé au plafond, au moins un montant que comporte ledit élément portant au moins un premier et un deuxième doigt inférieurs d'accrochage de la goulotte, ces premier et deuxième doigts étant horizontalement écartés l'un de l'autre et saillants dans deux directions sensiblement opposées, caractérisé en ce qu'il comporte une traverse de verrouillage portant une première et une deuxième surfaces formant butées respectivement pour une première et une deuxième parois latérales de la goulotte, ces première et deuxième surfaces étant tournées dans deux directions sensiblement opposées.

D'autres caractéristiques avantageuses de ce dispositif de fixation sont définies par les revendications 2 à 8 annexées.

L'invention a également pour objet un chemin de câbles comportant une succession de goulottes dont chacune comprend un fond et des première et deuxième parois latérales s'élevant à partir de ce fond, chacune de ces première et deuxième parois latérales définissant l'un de deux surplombs disposés à l'écart du fond, caractérisé en ce qu'il comprend un dispositif de fixation tel que défini ci-dessus, le premier et le deuxième doigt étant respectivement placés sous l'un et l'autre surplomb, le premier doigt et la première butée étant disposés de part et d'autre de la première paroi latérale, le deuxième doigt et la deuxième butée étant disposés de part et d'autre de la deuxième paroi latérale.

D'autres caractéristiques avantageuses de ce chemin de câbles sont définies par la revendication 10 annexée.

L'invention sera bien comprise à la lecture de la description qui va suivre, donnée uniquement à titre d'exemple et faite en se référant aux dessins annexés, sur lesquels :
- la figure 1 est une vue en perspective d'un tronçon d'un chemin de câbles conforme à l'invention et comportant un dispositif de fixation également conforme à l'invention,
- la figure 2 est une coupe transversale selon le plan II de la figure 1,
- les figures 3 à 5 sont des vues analogues à la figure 2, à plus petite échelle, et représentent respectivement trois étapes successives de l'installation du tronçon de chemin de câbles qui est représenté aux figures 1 et 2, et
- la figure 6 est une vue en perspective d'un tronçon d'un chemin de câbles comportant un dispositif de fixation selon une variante de réalisation de l'invention.

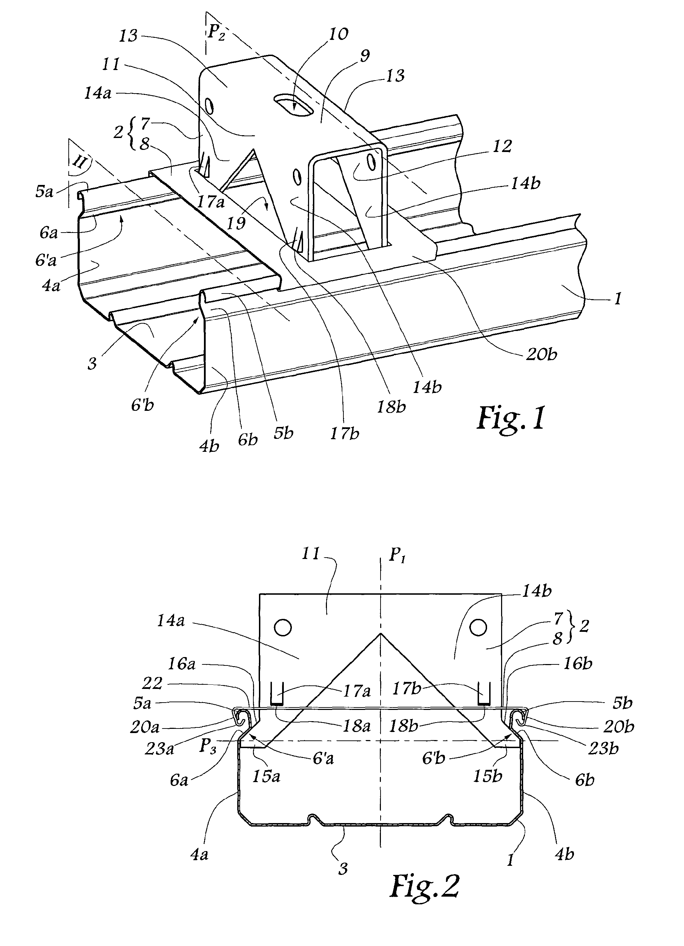

Un chemin de câbles conforme à l'invention est formé d'une succession de goulottes 1. Sur les figures 1 à 5, on a représenté seulement un tronçon de ce chemin de câbles. Ce tronçon comporte une telle goulotte 1, partiellement représentée, et un dispositif 2 de fixation de cette goulotte 1 sous un plafond.

La goulotte 1 est obtenue de manière connue par formage d'une tôle allongée. Elle comporte un fond globalement plat 3, à partir duquel s'étendent vers le haut deux parois latérales 4a et 4b.

Dans ce qui suit, on ne décrira que la paroi latérale 4a, dont la paroi 4b est symétrique par rapport à un plan longitudinal et vertical P₁. De plus, les références utilisées ci-après pour désigner des portions de la paroi latérale 4b sont construites en remplaçant, par la lettre « b », la lettre « a » placée à la fin des références repérant les portions semblables sur la paroi 4a.

La paroi latérale 4a se termine vers le haut par une portion supérieure qui se recourbe vers le bas, à l'extérieur de la goulotte 1, et forme ainsi des moyens d'accrochage 5a. En dessous et à proximité de ces derniers, cette paroi latérale 4a comporte une bande oblique 6a, qui définit un surplomb intérieur 6'a s'étendant selon la longueur de la goulotte 1.

Le dispositif de fixation 2 est symétrique par rapport au plan P₁ de symétrie de la goulotte 1. Il est en deux parties, dont chacune est réalisée par formage d'un flan métallique. L'une de ces deux parties est constituée par un élément 7 de retenue de la goulotte 1 par ses parois latérales 4a et 4b. L'autre partie est constituée par une traverse 8 de verrouillage de l'assemblage de cette goulotte 1 et de l'élément de retenue 7.

L'élément de retenue 7 est sensiblement symétrique par rapport à un plan P₂ transversal à la goulotte. Il comporte une embase horizontale de fixation 9, qui est percée d'un trou oblong 10 allongé selon ce plan P₂ et prévu pour le passage d'une vis, non représentée, de fixation de l'élément 7 à un plafond.

Deux montants 11 et 12 en regard s'étendent vers le bas à partir de l'embase de fixation 9, qu'un pli 13 relie à chacun d'eux. Chacun de ces montants 11 et 12 a globalement la forme d'une fourche et comporte deux branches latérales 14a et 14b, dont chacune se termine vers le bas par un doigt inférieur et latéral 15a ou 15b d'accrochage de la goulotte 1.

Les quatre doigts 14a et 15b s'étendent sensiblement selon un même plan P₃ horizontal. Chacun des deux doigts 15a et 15b d'un même montant 11 ou 12 est dirigé sensiblement dans la direction opposée à l'autre doigt 15a ou 15b de ce montant 11 ou 12. La face supérieure 16a ou 16b de chaque doigt 15a ou 15b est constituée par un bord oblique du flan métallique dans lequel est formé l'élément de retenue 7. Elle a sensiblement la même inclinaison que la bande oblique 6a de la goulotte 1.

Une languette 17a ou 17b, formant moyens d'encliquetage, est découpée dans chacune des branches 14a ou 14b du montant 11, de telle manière que son bord libre 18a ou 18b soit dirigé vers le bas. Chaque languette 17a ou 17b fait saillie dans la direction opposée au montant 12, puisqu'elle est légèrement décalée angulairement du montant 11 dans lequel elle est découpée.

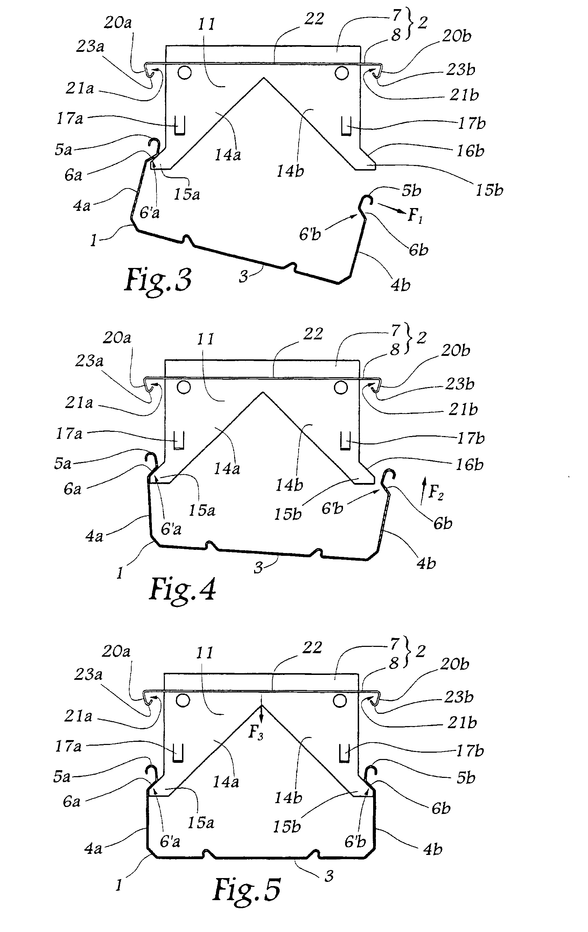

La traverse de verrouillage 8 a globalement la forme d'une portion de couvercle pour la goulotte 1. Elle est percée d'une ouverture 19 pour le passage de l'élément de retenue 7 et comporte deux rebords latéraux 20a et 20b, qui sont légèrement inclinés l'un vers l'autre et dont chacun définit l'une de deux surfaces en regard 21a et 21b (référencées aux figures 3 à 5), formant butées pour les parois latérales 4a et 4b de la goulotte 1. La portion inférieure 23a du rebord 20a et la portion inférieure 23b du rebord 20b se recourbent vers la portion intermédiaire 22 de la traverse 8 qui relie les rebords 20a et 20b entre eux, si bien qu'elles forment des moyens d'accrochage de la traverse 8 sur les parois latérales 4a et 4b de la goulotte 1.

Pour installer le tronçon de chemin de câbles représenté aux figures 1 et 2, on commence par enfiler la traverse 8 sur l'élément 7, dont on fixe ensuite l'embase 9 contre un plafond non représenté, à l'aide d'une vis également non représentée, passée dans le trou 10.

L'élément 7 étant fixé, on amène en appui le surplomb 6'a sur les deux doigts 14a, comme cela est représenté à la figure 3. on écarte ensuite élastiquement la paroi latérale 4b de la paroi latérale 4a, en exerçant une traction symbolisée par la flèche F₁ à la figure 3, après quoi l'on bascule la goulotte 1 vers le haut, autour des doigts 15a, ce qui est matérialisé par la flèche F₂ à la figure 4.

Une fois que le surplomb 6'b est plus haut que les doigts 15b, on relâche la paroi latérale 4b, qui, sous l'action d'un rappel élastique, revient d'elle-même vers la paroi latérale 4a. Suite à cela, la goulotte 1 est telle qu'illustrée à la figure 5, sur laquelle la flèche F₃ symbolise que l'on fait alors coulisser la traverse 8 vers le bas. Une fois que cette traverse 8 a franchi les languettes 17a et 17b et que les moyens d'accrochage 23a et 23b ont passé les moyens d'accrochage 5a et 5b, la goulotte 1 est montée sur le dispositif de fixation 2 et elle est telle qu'illustrée aux figures 1 et 2.

Ensuite, la goulotte 1 est montée, de la même manière, sur un autre dispositif de fixation 2 non représenté. En effet, une fois installée, la goulotte 1 est retenue par au moins deux dispositifs de fixation 2 écartés l'un de l'autre.

Il ressort de ce qui précède que, conformément au but de l'invention, l'installation du tronçon de chemin de câbles représenté aux figures 1 et 2 est particulièrement simple à effectuer. En particulier, le montage de la goulotte 1 sur le dispositif de fixation 2 ne nécessite aucun outil et ne requiert aucun réglage. De plus, il est particulièrement simple d'assembler le dispositif de fixation 2, puisque ce dernier ne comporte que deux pièces, dont il est aisé de monter l'une, à savoir la traverse 8, en l'enfilant sur l'autre.

Sur les figures 1 et 2, les doigts 15a, dont la face supérieure 16a s'applique sur la bande oblique 6a de la paroi latérale 4a, se trouvent sous le surplomb 6'a, tandis que les doigts 15b, dont la face supérieure 16b s'applique sur la bande oblique 6b, se trouvent sous le surplomb 6'b. De la sorte, ces doigts 15a et 15b retiennent la goulotte 1 par ses parois latérales 4a et 4b.

Par ailleurs, la traverse 8 repose sur les moyens d'accrochage 5a et 5b, sur lesquels sont en prise les rebords 20a et 20b. Les surfaces 21a et 21b que portent ces rebords 20a et 20b empêchent l'écartement des parois latérales 4a et 4b l'une de l'autre, ce qui verrouille le montage de la goulotte 1.

Les languettes 17a et 17b interdisent le coulissement vers le haut de la traverse 8, en dehors de la position dans laquelle les rebords 20a et 20b s'appliquent de part et d'autre de la goulotte 1. Il en est de même des moyens d'accrochage 23a et 23b, qui s'accrochent aux moyens d'accrochage 5a et 5b dès que l'on tente de coulisser la traverse 8 vers le haut.

Du fait de son propre poids et de celui de son contenu non représenté, la goulotte 1 exerce un effort sur chaque doigt 15a ou 15b. Cet effort est dirigé vers le bas, c'est-à-dire dans une direction dans laquelle les doigts 15a et 15b sont particulièrement solides. En effet, comme ils sont définis par une portion verticale du flan métallique dans lequel est réalisé l'élément 7, ces doigts 15a et 15b peuvent être découpés de manière à avoir une section transversale qui est plus haute que large.

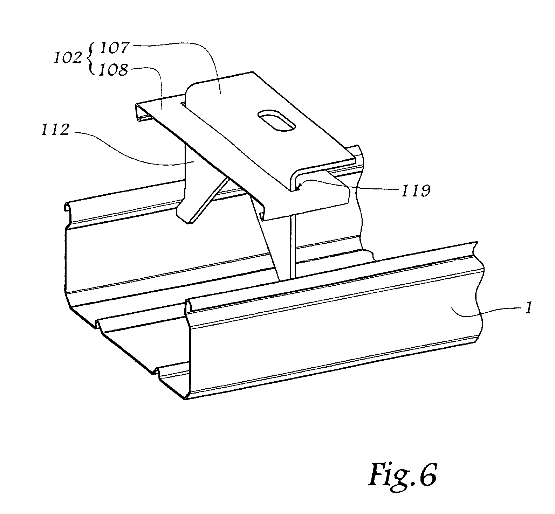

La figure 6 représente un tronçon de chemin de câbles selon une variante de réalisation de l'invention. Ce tronçon comporte un dispositif de fixation 102, qui retient une goulotte 1. Un élément de retenue 107 constitutif de ce dispositif de fixation 102 se distingue de l'élément 7 en ce qu'il est pourvu d'un unique montant 112 identique au montant 12. Une traverse de verrouillage 108 enfilée sur l'élément 107 est identique à la traverse 8, sauf en ce qu'elle est moins large et en ce qu'une ouverture 119 dont elle est percé et dans lequel passe l'élément 107 est moins large que l'ouverture 19.

Parmi les avantages de l'invention, on notera que les dispositifs de fixation 2 et 102 sont peu coûteux, puisque chacun d'eux ne comporte que deux pièces et que ces dernières sont simples à réaliser.

De plus, le fait que chacun des dispositifs de fixation 2 et 102 ne comporte que deux pièces conduit à des économies résultant d'une réduction du nombre de références à fabriquer, stocker et commercialiser.

L'invention ne se limite pas aux modes de réalisation décrits précédemment. En particulier, les doigts 15a et 15b d'un même montant peuvent être dirigés l'un vers l'autre et destinés à se positionner de part et d'autre de la goulotte, chacun sous un surplomb extérieur défini par une paroi latérale de cette goulotte. La traverse est alors telle qu'une fois installée, elle empêche le rapprochement des parois latérales de la goulotte l'une vers l'autre.

De plus, la traverse peut ne pas être percée d'une ouverture 19 ou 119 pour le passage de l'élément de retenue 7 ou 107. Elle peut alors être indépendante de l'élément de retenue 7 ou 107, c'est-à-dire prévue pour être montée directement sur la goulotte 1, par exemple à côté de cet élément de retenue 7 ou 107.

En outre, cet élément de retenue 7 ou 107, la traverse de verrouillage 8 ou 108 et la goulotte 1 peuvent ne pas être fabriqués dans des flans métalliques, mais réalisés en un autre matériau, par exemple en matière plastique.

## Revendications

1. Dispositif de fixation d'une goulotte (1) sous un plafond, comprenant un élément (7 ; 107) qui est apte à être fixé au plafond, au moins un montant (11, 12 ; 112) que comporte ledit élément (7 ; 107) portant au moins un premier (15a) et un deuxième doigt (15b) inférieurs d'accrochage de la goulotte (1), ces premier et deuxième doigts (15a, 15b) étant horizontalement écartés l'un de l'autre et saillants dans deux directions sensiblement opposées, **caractérisé en ce qu'**il comporte une traverse de verrouillage (8 ; 108) portant une première (21a) et une deuxième surfaces (21b) formant butées respectivement pour une première (4a) et une deuxième parois (4b) latérales de la goulotte (1), ces première et deuxième surfaces (21a, 21b) étant tournées dans deux directions sensiblement opposées.

2. Dispositif selon la revendication 1, **caractérisé en ce que** la traverse (8 ; 108) est percée d'une ouverture (19 ; 119) pour le passage dudit élément (7 ; 107) sur lequel cette traverse (8 ; 108) est enfilée.

3. Dispositif selon la revendication 2, **caractérisé en ce que** le montant (11) porte des moyens d'encliquetage (17a, 17b) aptes à laisser passer la traverse (8) uniquement vers le bas.

4. Dispositif selon l'une des revendications précédentes, **caractérisé en ce que** la traverse (8 ; 118) comporte deux rebords (20a, 20b) en regard, dont chacun définit l'une des première et deuxième surfaces (21a, 21b) formant butées, une portion inférieure de chaque rebord (20a, 20b) formant des premiers moyens d'accrochage (23a, 23b) en se recourbant vers la portion (22) de la traverse (8 ; 108) qui relie les deux rebords (20a, 20b) entre eux.

5. Dispositif selon l'une quelconque des revendications précédentes, **caractérisé en ce que** ledit élément (7) est réalisé dans un flan métallique et comprend une embase de fixation (9) qu'un pli (13) relie au montant (11, 12) .

6. Dispositif selon la revendication 5, **caractérisé en ce que** les premier et deuxième doigts d'accrochage (15a, 15b) sont définis par une portion verticale du flan métallique et sont découpés de manière à avoir une section transversale qui est plus haute que large.

7. Dispositif selon l'une quelconque des revendications précédentes, **caractérisé en ce que** ledit montant (11, 12 ; 112) porte à la fois le premier (15a) et le deuxième doigt d'accrochage (15b).

8. Dispositif selon les revendications 5 et 7, **caractérisé en ce que** ledit élément (7) comporte un deuxième montant (12) portant un troisième (15a) et un quatrième doigt (15b) inférieurs d'accrochage de la goulotte (1), l'embase de fixation (9) reliant le deuxième montant (12) au montant (11) portant les premier et deuxième doigts (15a, 15b), le troisième doigt (15a) étant décalé du premier doigt (15a) dans une direction dans laquelle le quatrième doigt (15b) est décalé du deuxième doigt (15b), le premier (15a) et le troisième doigt (15a) étant saillants sensiblement dans la même direction, le deuxième (15b) et le quatrième doigt (15b) étant saillants sensiblement dans la même direction.

9. Chemin de câbles comportant une succession de goulottes (1) dont chacune comprend un fond (3) et des première et deuxième parois latérales (4a, 4b) s'élevant à partir de ce fond (3), chacune de ces première et deuxième parois latérales (4a, 4b) définissant l'un de deux surplombs (6'a, 6'b) disposés à l'écart du fond (3), **caractérisé en ce qu'**il comprend un dispositif de fixation (2 ; 102) selon l'une quelconque des revendications précédentes, le premier (15a) et le deuxième doigt (15b) étant respectivement placés sous l'un (6'a) et l'autre surplomb (6'b), le premier doigt (15a) et la première butée (21a) étant disposés de part et d'autre de la première paroi latérale (4a), le deuxième doigt (15b) et la deuxième butée (21b) étant disposés de part et d'autre de la deuxième paroi latérale (4b).

10. Chemin de câbles selon la revendication 9, **caractérisé en ce que** le dispositif de fixation (2 ; 102) est selon la revendication 4, une portion supérieure de chacune des première et deuxième parois latérales formant des deuxièmes moyens (5a, 5b) d'accrochage aux premiers moyens d'accrochage (23a, 23b) en se recourbant vers le bas, à l'extérieur de la goulotte (1).
